# EUROPÄISCHE PATENTANMELDUNG

(11) **EP 0 976 527 A1**
(43) Veröffentlichungstag der Anmeldung: **02.02.2000**
(21) Anmeldenummer: 98114140.1
(22) Anmeldetag: 29.07.1998
(51) Int. Cl.: B29C 49/64, B29C 49/46, B29C 49/48

(54) **"Verfahren zur Herstellung von Verpackungsbehältern aus Kunststoffen nach der Blasmethode"**

(71) Anmelder: BEKUM Maschinenfabriken GmbH, D-12107 Berlin (DE)
(72) Erfinder: Mehnert, Andreas, 14193 Berlin (DE)
(74) Vertreter: Flosdorff, Jürgen, Dr.

(57) **Zusammenfassung**

Für die Verpackung verderblicher Lebensmittel und Pharmazeutika werden auch blasgeformte Verpackungen, z.B. Milschflaschen, verwendet, die einerseits unter sterilen Bedingungen erzeugt und abgefüllt werden müssen, andererseits aber aus einem Kunststoff bestehen sollen, der lebensmittelverträglich und trotzdem preiswert ist, wofür in erster Linie Polyolefine in Frage kommen.Bisher wird hierzu das Extrusions-Blasverfahren eingesetzt, bei dem die in einem Extruder aufbereitete thermoplastische Masse in einem Schlauchkopf in einen Hohlstrang umgewandelt wird, von dem Abschnitte als Vorformlinge in eine geteilte offene Blasform eingebracht und nach Schließen derselben und Einführen eines sterilen Blasmediums zum Hohlkörper gewünschter Gestalt aufgeblasen werden. Ein Nachteil dieses Herstellungsverfahrens ist, daß die erzielbare Ausstoßleistung verfahrenstechnisch begrenzt ist. Die Erfindung schlägt deshalb vor, die Herstellung steriler Verpackungen im Extrusions-Blasverfahren, auch für die Herstellung von Verpackungen aus PE durch das an sich aus der PET-Verarbeitung bekannte Reheat-Verfahren zu ersetzen, wodurch nicht nur die Ausstoßleistung erheblich gesteigert werden kann, sondern auch die Sicherheit, den Innenraum der gefertigten Hohlkörper so keimarm wie möglich zu machen, gegenüber dem Extrusions-Blasverfahren noch erhöht werden kann.

## Beschreibung

Für die Verpackung verderblichen Inhalts, z.B. Lebensmittel, wie Milchprodukte, Ketchup u.dgl. sowie Pharmazeutika, werden u.a. blasgeformte Hohlkörper in Form von Flaschen, Kanistern u.dgl. eingesetzt, die einerseits unter Sterilbedingungen erzeugt und abgefüllt werden müssen, andererseits aus einem Kunststoff bestehen sollen, der lebensmittelverträglich und trotzdem preiswert ist, wofür in erster Linie Polyolefine, wie z.B. PE, PP in Frage kommen. Ein klassisches Beispiel hierfür sind Milchflaschen für die Abfüllung mit sog. H-Milch.

Die Herstellung von Hohlkörpern aus Polyolefinen und so auch die Herstellung der vorerwähnten Hohlkörper für verderblichen Inhalt, geschieht nach Kenntnis der Anmelderin bisher mit dem Extrusions-Blasverfahren, bei dem die in einem Extruder durch Druck und Wärme des Rohkunststoffs aufbereitete thermoplastische Masse durch die Extruderdüse als Strang ausgeformt und in einem anschließenden Schlauchkopf in einen Hohlstrang umgewandelt wird, von dem Abschnitte als Vorformlinge in eine geteilte offene Blasform eingebracht und nach Schließen derselben und Einführen eines sterilen Blasmediums, meist Luft, zum Hohlkörper gewünschter Gestalt aufgeblasen werden.

Selbst wenn man in Betracht zieht, daß dabei die Blasform drei und u.U. sogar mehr gleichzeitig Hohlkörper formende Kavitäten (Formmulden) aufweisen kann, die von mehrere Hohlstränge gleichzeitig parallel nebeneinander erzeugenden Schlauchköpfen versorgt werden können und weiter in Betracht zieht, daß bei nach dem sog. Shuttle-Prinzip arbeitenden Extrusions-Blasmaschinen zwei Blasformen abwechselnd zur Aufnahme der Vorformlinge unter die Schlauchkopfdüse gefahren werden können, ist die durch dieses Herstellungsverfahren erzielbare Ausstoß-Leistung verfahrenstechnisch begrenzt. Abhängig von der Zahl der Formmulden bzw. Kavitäten lassen sich auf einer Maschine, z.B. von einer 1 l-Flasche maximal etwa 5.000/ Std herstellen.

Aufgabe der Erfindung war es deshalb, für die Herstellung von Verpackungen für verderbliche Lebensmittel und Pharmazeutika durch Kunststoff-Blasformung ein Verfahren zu finden, das die Ausstoßleistung pro Zeiteinheit merklich anzuheben gestattet, wobei gleichzeitig die Bedingungen für die sterile Herstellung gewahrt, ja sogar verbessert werden können.

Der der Lösung zugrunde liegende Gedanke liegt darin, die Herstellung steriler Hohlkörper im Extrusions-Blasverfahren auch für die Herstellung von Hohlkörpern aus Polyolefinen durch das an sich aus der PET-Verarbeitung bekannte Reheat-Verfahren zu ersetzen, wodurch nicht nur die Ausstoßleistung erheblich gesteigert werden kann, sondern auch die Sicherheit, den Innenraum der gefertigten Hohlkörper so keimarm wie möglich zu machen, gegenüber dem Extrusions-Blasverfahren noch erhöht werden kann.

Eine wesentliche Erhöhung der Ausstoßleistung ergibt sich bei Anwendung des Reheat-Verfahrens dadurch, daß die vor der Erhitzung auf Blastemperatur bereits im Spritzverfahren hergestellten und einem Vorrat entnommenen patronenförmigen Vorformlinge, häufig mit bereits ausgeformter Halspartie und ggf. mit einem Gewinde für einen Schraubverschluß versehen, in dichter Packung auf die Wiedererhitzungsstrecke gegeben und damit jeweils mehrere Vorformlinge gleichzeitig, gegebenenfalls an zu beiden Seiten am Ende der Erhitzungsstrecke aufgestellte Blaseinheiten übergeben und in diesen ausgeblasen werden können.

Bei Anwendung des Extrusions-Verfahrens wird in der Regel für die Herstellung der Vorformlinge aus dem kontinuierlich aus dem Schlauchkopf ausgepreßten Hohlstrang eine sog. Kapp-Trennung durchgeführt, d.h. für das Abtrennen eines den Vorformling bildenden Schlauchabschnitts unterhalb der Schlauchkopfdüse eine Trennvorrichtung eingesetzt, die in einem Arbeitsgang den Vorformling so vom Nachschub abtrennt, daß das obere Ende des abgetrennten Vorformlings offen bleibt, während das untere Ende des Nachschubs durch Verschweißen verschlossen wird. Dadurch wird ein ballonartiger Vorformling erzeugt, der am unteren Ende geschlossen ist und am oberen Ende für das Einschießen eines das Blasmedium einführenden und gleichzeitig die Füll- und Entleerungsöffnung formenden Blas- und Kalibrierdornes nach dem seitlichen Verfahren des Vorformlings aus der Schlauchstation in eine Blasstation offen bleibt. Dadurch kann aber während der Überführung des Vorformlings in die Blasstation Umgebungsluft von oben in den Vorformling einströmen, bis in die geschlossene Form mit dem oben offenen in ihr hängenden Vorformling der Blas- und Kalibrierdorn einfährt. Zwar liegen während der Zeit des Ausstoßes eines Vorformlings, dem Schließen der Blasform um den in voller Länge vorhandenen Vorformling und dem Transport der geschlossenen Form aus der Vorformlingsaufnahmestellung in die Blasstation noch hohe Temperaturen vor, womit die Chance, daß viele in das Vorformlingsinnere mit der Umgebungsluft einströmende Keime abgetötet werden, groß ist, aber andererseits sollen die vorstehend aufgeführten Verfahrensschritte vom Auspressen des Vorformlings bis zum Einfahren des Blasdorns in das offene Schlauchende so schnell wie möglich ablaufen, um überhaupt einen Ausstoß in gewisser Menge zu erzielen. Hierzu gehört auch, daß sowohl die Blasform als auch der Blasdorn gekühlt werden, um eine möglichst schnelle Erhärtung des ausgeformten Hohlkörpers mit der Folge der Möglichkeit einer schnellen Entnahme desselben aus der Form zu erzielen. Man muß deshalb dafür sorgen, daß der gesamte Vorgang in einem Raum mit möglichst keimarmer Umgebung stattfindet, was aufwendig ist. Anders verhält es sich bei dem Reheat-Verfahren, bei dem die auf den Anfang eines Transportorgans gestellten kalten Vorformlinge gegenüber dem Extrusionsverfahren verhältnismäßig langsam auf die Blastemperatur erhitzt werden, also genügend Zeit zur Verfügung steht, die eventuell im Innenraum des Vorformlings vorhandene Keime abzutöten. Die Erhitzung soll und kann auch über einen verhältnismäßig längeren Zeitraum stattfinden, denn einerseits spielt die Zeit der Erhitzung eine untergeordnete Rolle, weil immer genügend Vorformlinge für das Verblasen zur Verfügung stehen und andererseits eine längere Zeit andauernde Erhitzung dafür sorgt, daß sich die dem einzelnen Vorformling von außen mitgeteilte Wärme über den gesamten Querschnitt des Vorformlings vergleichmäßigt, also diese nicht außen größer als innen ist. Da die Vorformlinge meist patronenförmig mit einem bereits geschlossenen Boden für das Aufblasen vorliegen, ist die Zeit für die Übergabe des erhitzten Vorformlings von der Erwärmungsstrecke in die Blaseinheit kürzer als die Zeit, in der bei dem Extrusionsverfahren der vorher aus der Schlauchdüse ausgepreßte und in die Blasstation überführte Vorformling durch das Einführen eines Blasdorns oben geschlossen wird, d.h. die Gefahrenzeit für das Einströmen keimhaltiger Umgebungsluft wird reduziert.

Da ein Blas- und Kalibrierdorn wie beim Extrusions-Blasverfahren für das mit vorgeformten Vorformlingen arbeitende Reheat-Verfahren nicht benötigt wird, d.h. ein Blasdorn, der nicht nur Blasluft für das Aufweiten des Vorformlings bis zur Anlage an die Formkavität einführt, sondern auch durch eine besondere Gestaltung den Halsbereich des Vorformlings durch Preßformen zum Hohlkörperhals, gegebenenfalls mit Gewinde, ausformt, kann auch das Blasluft einführende und gegebenenfalls mit einem Reckstempel versehene Blasorgan einfacher gestaltet werden und damit auch sog. tote Ecken, in die u.U. nicht genügend Keime abtötende Hitze gelangen kann, vermieden werden.

Damit reduziert sich die Gefahr auf das Einströmen des Blasmediums in die dann bereits kühlende Form, d.h. das Blasmedium, z.B. Luft, soll ebenso wie im Extrusionsverfahren steril aufbereitet sein.

Zweckmäßig werden dabei in das Innere der Vorformlinge eindringende Maschinenteile, z.B. Blasdorne und gegebenenfalls Reckstempel, eingesetzt, die leicht sterilisierbar sind, z.B. aus V4A-Stahl bestehende Blasdorne. Transportdorne, auf denen die Vorformlinge durch die Heizstrecke durchgetaktet werden, müssen dagegen nicht aus sterilisierbarem Material bestehen, weil sich auf ihnen beim Durchtakten wegen der auf sie einwirkenden Hitze keine wirksamen Keime bilden können.

Außerdem kann die offene Füll- und Entleerungsöffnung des ausgeblasenen Hohlkörpers unmittelbar nach dem Verlassen der Blasform oder mit einem in die noch nicht geöffnete Blasform eingeführten Stempel unter sterilen Bedingungen versiegelt werden.

Bei dem Reheat-Verfahren kann die für die verschiedenen Kunststofftypen etwas unterschiedliche Blastemperatur sowohl von oben als auch von unten angesteuert werden. Bei dem Ansteuern von oben, z.B. nach der EP 0 387 737 B1, wird der Vorformling zunächst auf eine Temperatur oberhalb der Blastemperatur erhitzt, um danach in einer Ausgleichsstrecke die Blastemperatur zu erreichen, während bei der Ansteuerung von unten, z.B. nach der EP 0 500 028 A1, die Vorformlinge unter steter Zunahme der Erwärmung, gegebenenfalls mit dem Halten der Vorformlinge eine gewisse Zeit lang unterhalb der Blastemperatur und nachfolgender kurzzeitiger Erhitzung auf die Blastemperatur, direkt auf diese Temperatur erhitzt werden. Für die Herstellung von Hohlkörpern mit sterilem Innenraum empfiehlt sich die Erhitzung zuerst auf eine Temperatur oberhalb der Blastemperatur, um der Gefahr zu begegnen, daß vor der Überführung der Vorformlinge in die Blaseinheit eventuell in das Vorformlingsinnere eindringende Keime nicht vor dem Einführen des Blasdornes abgetötet werden.

## Patentansprüche

1. Verfahren zur Herstellung von Verpackungsbehältern aus Polyolefinfn, wie z.B. PE, PP nach dem Blasformverfahren für die Befüllung mit leicht verderblichen Lebensmitteln und Pharmazeutika, dadurch **gekennzeichnet,** daß die aus der PET-Verarbeitung bekannten Behälter nach dem Reheat-Verfahren hergestellt werden, bei dem einem Vorrat entnommene, kalte Vorformlinge auf einem Transportorgan eine sie gegebenenfalls stufenweise mit zwischengeschalteten Ausgleichsabschnitten auf Blastemperatur bringende Erhitzungsstrecke durchlaufen, von deren Ende sie nach Erreichen der Blastemperatur abgenommen und in eine Blaseinheit überführt werden, in der sie nach dem Schließen der Blasform zum Hohlkörper ausgeblasen, gekühlt und aus der sie anschließend entnommen werden.

2. Verfahren nach dem Anspruch 1, dadurch **gekennzeichnet,** daß die einem Vorrat entnommenen kalten Vorformlinge im Spritzverfahren mit bereits ausgeformter, gegebenenfalls mit Gewinde versehener Öffnung und geschlossenem Boden hergestellt werden und mit dem Boden nach oben die Heizstrecke der Reheat-Anlage durchlaufen.

3. Verfahren nach den Ansprüchen 1 und 2, dadurch **gekennzeichnet,** daß die patronenförmigen Vorformlinge mit dem Boden nach oben von der Heizstrecke in die Blaseinheit übergeführt und in dieser von unten zum Hohlkörper gewünschter Gestalt aufgeblasen werden.

4. Verfahren nach den Ansprüchen 1 bis 3, dadurch **gekennzeichnet,** daß jene Maschinenteile, die die Innenwandung der Vorformlinge vor oder während des Aufblasens zum Verpackungsbehälter oder Teile derselben berühren, wie Blasdorne und Reckstempel, aus einem leicht sterilisierbaren Material, z.B. V4A-Stahl, hergestellt werden.

5. Verfahren nach den Ansprüchen 1 bis 4, dadurch **gekennzeichnet,** daß das die Vorformlinge in der Blasform zum Verpackungskörper aufweitende Blasmedium, z.B. Luft, steril aufbereitet ist.

6. Verfahren nach den Ansprüchen 1 bis 5, dadurch **gekennzeichnet,** daß die Blastemperatur derart von oben angesteuert wird, daß die Vorformlinge zunächst auf eine Temperatur oberhalb der Blastemperatur erhitzt werden, um danach in einer Ausgleichsstrecke die Blastemperatur zu erreichen.

7. Verfahren nach den Ansprüchen 1 bis 6, dadurch **gekennzeichnet,** daß die Füll- und Entleerungsöffnungen des ausgeblasenen Verpackungskörpers noch in der Blasform oder unmittelbar nach Entnahme aus derselben, z.B. durch Aufbringen einer Folie, versiegelt wird.

8. Verfahren nach den Ansprüchen 1 bis 6, dadurch **gekennzeichnet,** daß der aufgeblasene Verpackungskörper durch geeignete Hilfsvorrichtungen (z.B. Laminar-flow) bis zur Abfüllung steril gehalten wird.
